# EUROPÄISCHE PATENTSCHRIFT

(11) **EP 4 069 497 B1**
(45) Veröffentlichungstag und Bekanntmachung des Hinweises auf die Patenterteilung: **26.03.2025**
(21) Anmeldenummer: 20859642.9
(22) Anmeldetag: 03.12.2020
(51) Int. Cl.: B29C 65/02, B29C 65/76, B65D 75/40, B65B 51/26, B65B 51/30, B65D 75/00, B65D 75/52

(54) **VERFAHREN ZUR HERSTELLUNG EINER MEHRLAGIGEN NAHT**
METHOD FOR PRODUCING A MULTI-LAYER SEAM
PROCÉDÉ DE FABRICATION D'UNE SOUDURE MULTICOUCHE

(30) Priorität: 06.12.2019 DE 102019133446; 10.12.2019 DE 102019133625; 11.03.2020 DE 102020106662
(43) Veröffentlichungstag der Anmeldung: 12.10.2022
(73) Patentinhaber: Technische Universität Dresden, 01069 Dresden (DE)
(72) Erfinder: OTTO, Christiane, 01324 Dresden (DE)
(74) Vertreter: Gottfried, Hans-Peter
(86) Internationale Anmeldenummer: PCT/DE2020/101024
(87) Internationale Veröffentlichungsnummer: WO 2021/110216

(56) Entgegenhaltungen:
- EP-A1- 2 829 478
- US-A- 2 154 521
- US-A- 5 947 287
- US-B1- 10 336 483

## Beschreibung

Die Erfindung betrifft ein Verfahren zur Herstellung einer mehrlagigen Naht eines Packmittels, wobei wenigstens drei Lagen Packstoff, zwei Innenlagen und wenigstens eine Außenlage, derart verbunden werden, dass wenigstens eine erste Teilnaht zwischen den zwei Innenlagen hergestellt wird, die eine erste Nahtfestigkeit aufweist, und eine im Wesentlichen in derselben Position wie die wenigstens eine erste Teilnaht angeordnete, wenigstens eine zweite Teilnaht zwischen wenigstens zwei Lagen, einer der Innenlagen und einer der Außenlagen, hergestellt wird, die eine zweite Nahtfestigkeit aufweist. Mehrlagige Nähte, insbesondere Siegelnähte, bei Verpackungen, beispielsweise bei Schlauchbeutelverpackungen, und ihre Herstellung sind aus dem Stand der Technik bekannt. Dabei gelten alle Ausführungsformen gleichermaßen für vertikale Schlauchbeutelmaschinen wie auch für horizontale Schlauchbeutelmaschinen.

Die Druckschrift DE 87 00 122 U1 beschreibt ein Packmittel bzw. einen Packstoff, der auf einer Schlauchbeutelmaschine verarbeitbar ist und zwei Lagen aufweist, die bereits miteinander verbunden sind. Durch den Haftverbund zwischen beiden Lagen wird jedoch eine spätere Trennung der unterschiedlichen Materialien erschwert. Auf jeden Fall bringt die Lagerung und Zuführung auf einer Rolle die Gefahr einer Kontamination der Seite, die mit dem Packgut in Berührung kommt, durch den Kontakt mit der bedruckten Außenseite. Dieser unerwünschte Effekt einer Kontamination wird auch als Abklatschmigration bezeichnet.

Aus den Druckschriften DE 11 67 002 A, bei der zwischen zwei Lagen eine stabilisierende Einlage eingebracht wird, und DE 696 01 673 T2, bei der zwischen zwei Lagen ein Gas eingebracht wird, sind ebenfalls auf einer Schlauchbeutelmaschine verarbeitbare Packstoffe bekannt. Da auch hierbei die Packstoffe auf einer einzigen Rolle gelagert und zugeführt werden, besteht ebenfalls die Gefahr einer Kontamination der Seite, die mit dem Packgut in Berührung kommt, durch den Kontakt mit der bedruckten Außenseite.

Nach der Druckschrift GB 2 109 768 A ist zwar vorgesehen, zwei Bahnen von getrennten Rollen aus der Schlauchbeutelherstellung zuzuführen. Jedoch werden dadurch keine Schlauchbeutel mit doppelten Lagen hergestellt. Jede der beiden Bahnen trägt nur halbseitig zum derart gefertigten Schlauchbeutel bei, indem zwei Längsnähte die beiden Bahnen zu einem Schlauch verbinden.

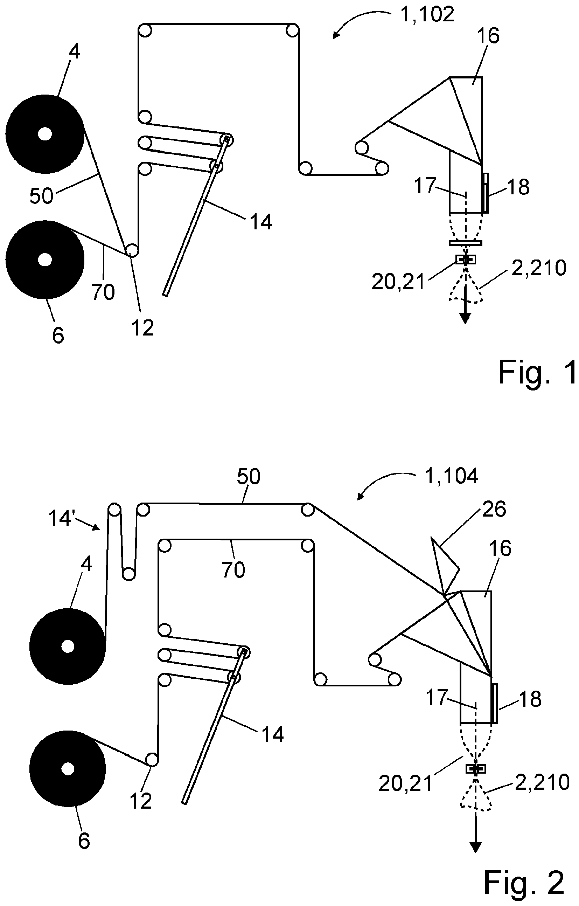

Die Druckschrift DE 12 30 710 A beschreibt ebenfalls die Herstellung eines Schlauchbeutels, wobei auch eine Zuführung mehrerer Lagen Packstoff vorgesehen ist. Dies ist nicht Gegenstand der Erfindung und findet keine Beachtung in der Beschreibung. Erkennbar ist in Fig. 1, dass die Vereinigung kurz nach dem

Entspeichern von der Rolle erfolgt und die beiden Bahnen gemeinsam durch die Maschine zur Formschulter laufen, wo der zweilagige Schlauch gebildet und der Siegelung zugeführt wird. Hinweise darauf, wie die Siegelung bei doppelten Lagen erfolgen kann und welche Effekte damit verbunden sind, sind der Druckschrift nicht zu entnehmen.

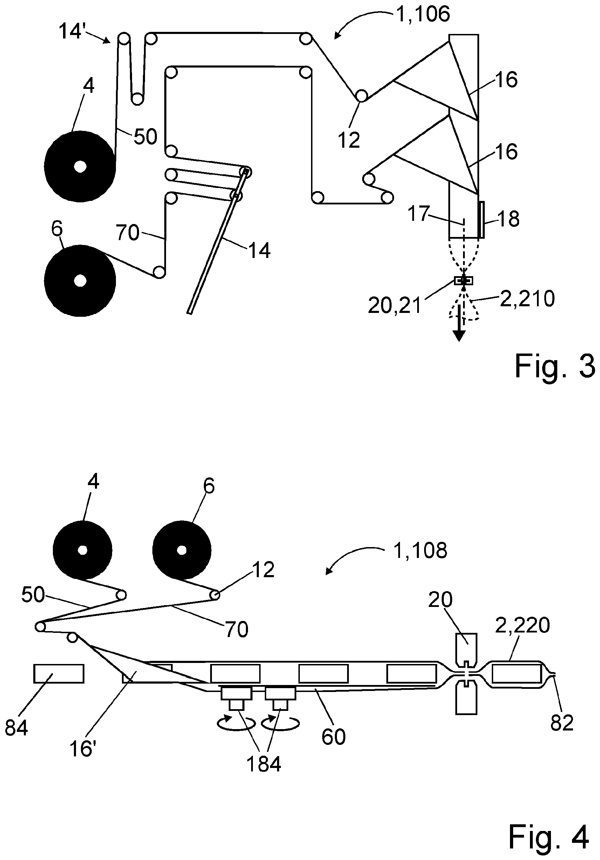

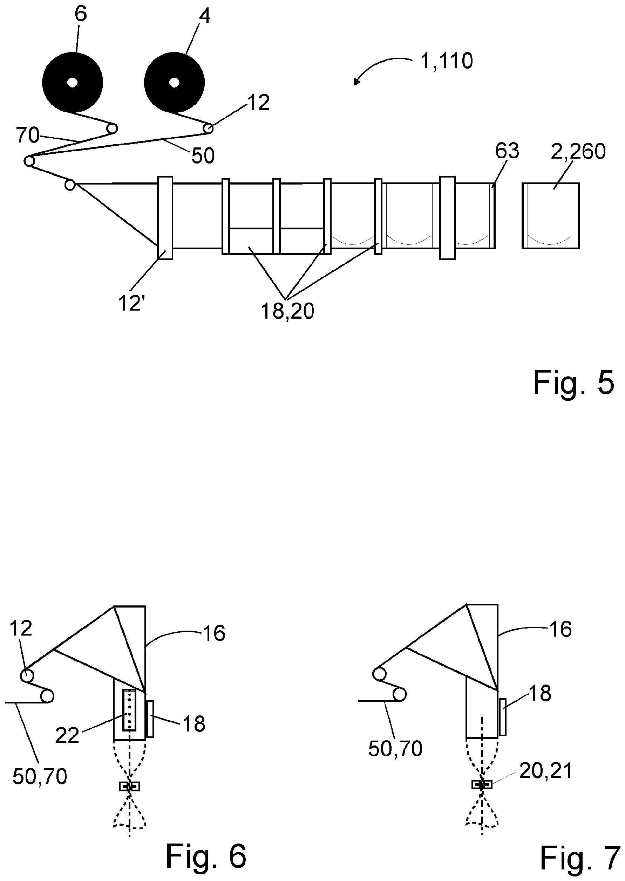

Die Druckschrift US 5 947 287 A zeigt in Fig. 5 Sollbruchstellen 1002 und 1003 (Fig. 5) bzw. 2001 und 2002 (Fig. 7) in der Materialbahn neben der Naht 15, jedoch keine Naht als Trennverbindung. Die Naht 15 selbst bleibt geschlossen. So ist in der Beschreibung in Spalte 9, Zeilen 43-47 ausgeführt: *"Dementsprechend, wenn der Beutel dieser Ausführungsform wie oben in Verbindung mit den* *Figuren 4-6* *beschrieben aufgezogen wird, beinhaltet ein Delaminationsfehler ein Reißen der Heißsiegelschicht 231 bei 2001 und 2002 und ein Delaminieren im Bereich 2003, wodurch ein Zugang zum Hohlraum 16 geschaffen wird."* Die Bahn 12, 23 hat eine gesonderte Heißsiegelschicht 231 (vgl. Fig. 7), die zugleich die Sollbruchstelle ausbildet. Jedenfalls trennt sich nicht die Naht.

Die Druckschriften US 2 154 521 A, US 10 336 483 B1 und EP 2 829 478 A1 offenbaren jeweils eine Vorrichtung zur Herstellung eines doppelwandigen Schlauchbeutels mit einem Innenbeutel und einem Außenbeutel. Die Möglichkeit einer Trennung des Innenbeutels vom Außenbeutel ist nicht vorgesehen, insbesondere ist keine Naht zwischen Innenbeutel und einem Außenbeutel trennbar.

Weitere mehrlagige Packmittel sind in den Druckschriften DE000004023602A1, DE 10 2010 037 168 A1, EP 3 168 169 A1, WO 2003/057577 A1, WO 2004/103845 A2, WO 2011/092142 A1, WO 2014/084721 A1 und WO 2014/128167 A1.

Es ist daher Aufgabe der vorliegenden Erfindung, ein Verfahren, eine Vorrichtung und ein Packmittel anzubieten, bei den wenigstens zwei getrennt zugeführte Lagen zu einem Packmittel verbunden werden und die Nahtfestigkeit zwischen den Lagen und innerhalb der Lagen eingestellt wird.

Die Aufgabe wird durch ein Verfahren gemäß Anspruch 1 gelöst.

Nach der Erfindung werden wenigstens drei Lagen Packstoff, zwei Innenlagen und wenigstens eine Außenlage, derart verbunden werden, dass wenigstens eine erste Teilnaht zwischen den zwei Innenlagen hergestellt wird, die eine erste Nahtfestigkeit aufweist, und eine in der im Wesentlichen selben Position wie die wenigstens eine erste Teilnaht angeordnete, wenigstens eine zweite Teilnaht zwischen wenigstens zwei Lagen, einer der Innenlagen und einer der Außenlagen, hergestellt wird. Die zweite Teilnaht weist eine zweite Nahtfestigkeit auf. Die erste und die zweite Nahfestigkeit werden durch die Bindungseigenschaften wenigstens einer der Oberflächen oder des Materials, insbesondere bei Verwendung ein Monomaterials, der Innenlagen und der wenigstens einen Außenlage zumindest im Bereich der wenigstens ersten Teilnaht und/oder der wenigstens zweiten Teilnaht derart ausgeführt, dass durch die erste Teilnaht eine Verschlussverbindung für einen ersten Nutzungszyklus und durch die zweite Teilnaht eine beim Öffnen einer Verpackung, also dem Packmittel mit Inhalt, nicht zu lösende, jedoch zur Ablösung der Außenlage während eines zweiten Nutzungszyklus', insbesondere zur Materialtrennung für das Recycling, ausgeführte Trennverbindung gebildet werden.

Der erste Nutzungszyklus umfasst insbesondere das Öffnen des Packmittels bzw. der Verpackung zur Entnahme des Inhalts. Das Öffnen kann beispielsweise durch Aufziehen einer peelbaren ersten Teilnaht erfolgen. In dem Fall ist die Nahtfestigkeit der ersten Teilnaht geringer als die Nahtfestigkeit der zweiten Teilnaht, die erst nach Entleeren der Verpackung geöffnet wird. Anders ist das Verhältnis der Nahtfestigkeiten ausgeführt, wenn die erste Teilnaht beim Öffnen des Packmittels bzw. der gefüllten Verpackung geschlossen bleibt, weil beispielsweise zum Öffnen ein Hilfsmittel (z. B. Aufreißband oder Aufreißlasche als Bestandteil des Packmittels; Schere) vorgesehen ist. In dem Fall bleibt die erste Teilnaht auch nach dem Entleeren der Verpackung und beim Trennen der zweiten Teilnaht, beim Ablösen der Außenlage während eines zweiten Nutzungszyklus', noch geschlossen.

Das erfindungsgemäße Verfahren ist insbesondere für ein Verfahren zur Herstellung einer mehrlagigen Schlauchbeutelverpackung vorgesehen. Vorteilhafte Weiterbildungen sind in den abhängigen Unteransprüchen angegeben sowie nachfolgend erläutert. Bei dem bevorzugten und an sich bekannten Verfahrensablauf werden die Lagen Packstoff zur Ausbildung eines mehrlagigen Schlauchs in einem ersten Schritt separat oder gemeinsam zugeführt, in einem zweiten Schritt der Schlauch geformt, in einem dritten Schritt eine Längsnaht gebildet, wobei der Schlauch dadurch längs geschlossen wird. In einem vierten Schritt wird eine Quernaht gebildet, die nach dem Befüllen mit einem Packgut und gemeinsam mit der im vorausgehenden Takt gebildeten Quernaht aus dem Schlauch die Schlauchbeutelverpackung bildet.

Nach der Erfindung werden zumindest jeweils zwei Lagen Packstoff derart verbunden, dass die während eines zweiten Nutzungszyklus' zum Recycling lösbare Trennverbindung gebildet wird. Es ist demnach vorgesehen, dass insgesamt wenigstens drei Lagen Packstoff derart verbunden werden, dass wenigstens eine erste Naht zwischen wenigstens zwei ersten Lagen eine erste Nahtfestigkeit aufweist und eine Verschlussverbindung ausbildet. Bei der Längsnaht sind es drei Lagen Packstoff, wenn die Außenlage mit nur einer Seite mit der Naht verbunden wird. Anderenfalls, wenn auch die Außenlage beidseitig Teil der Naht ist, sind es auch bei der Längsnaht vier Lagen, so wie generell bei der Quernaht.

Zudem ist wenigstens eine, vorteilhafterweise zwei, besonders bevorzugt in der im Wesentlichen selben Position wie die wenigstens eine erste Naht angeordnete, bevorzugt auch zugleich mit dieser hergestellte, wenigstens eine zweite Naht zwischen wenigstens zwei zweiten Lagen, einer Außenlage und einer Innenlage, eine zweite Nahtfestigkeit aufweist und eine Trennverbindung zwischen der Außenlage und der Innenlage ausbildet. Die Nahfestigkeiten unterscheiden sich derart, dass eine während eines ersten Nutzungszyklus' beim Öffnen einer Verpackung, die mit dem erfindungsgemäßen Packmittel ausgebildet wird und deren Inhalt nach dem Öffnen entnommen werden soll, nicht lösbare, während eines zweiten Nutzungszyklus' jedoch lösbare Trennverbindung gebildet werden.

Neben der zuvor beschriebenen bevorzugten Ausgestaltung der zweiten Naht, der Trennverbindung, ist es bei alternativen Ausführungsformen auch vorgesehen, nur die Außenlage nur an einer Seite, beispielsweise im Bereich der ersten Naht, der Verschlussbindung, mit der Innenlage zu verbinden. Dies ermöglicht eine noch einfachere Trennung von Innen- und Außenlage für das Recycling, indem eine Lasche oder ein Eingriff entsteht, wo für den Trennvorgang angesetzt werden kann. Zudem wird für den ersten Nutzungszyklus ein zusätzliches, von außen zugängliches Fach zwischen gebildet Innen- und Außenlage, in das beispielsweise fakultative Informationsträger oder andere Gegenstände eingelegt werden könnten.

Weiterhin kann die Außenlage als eine Umverpackung, auch zu einer Versteifung des gesamten Packmittels, dienen, wobei die Innenseite der Außenlage und/oder die Außenseite der Innenlage Informationen aufweisen kann, die nach dem zumindest teilweisen Entfernen der Außenlage zugänglich werden.

Das zumindest teilweise Entfernen der Außenlage, unabhängig davon, ob sie einseitig, beidseitig oder an anderer Position als der ersten Naht mit der Innenlage verbunden ist, kann auch zusätzliche Funktionen bieten. Dazu gehören z. B. ein Aufsteller für die Verpackung, eine Dosierhilfe zur Entnahme des Inhalts und/oder gestalterische Mittel, die erst bei der Verwendung entfaltet werden und während Transport und Lagerung platzsparend in die anliegende Außenlage integriert sind.

Der erste Nutzungszyklus umfasst nach einer vorteilhaften Ausgestaltung das Öffnen einer aus dem Packmittel hergestellten Verpackung durch Lösen der lösbaren Verschlussverbindung oder durch ein anderes Mittel zum Öffnen, wenn die Verschlussverbindung als eine nicht lösbare Verbindung ausgeführt ist. Der zweite Nutzungszyklus umfasst insbesondere eine Trennung der Lagen zumindest in unterschiedliche Packstoffe durch Lösen der Trennverbindung. Zum zweiten Nutzungszyklus zählen jedoch nicht nur das Lösen der Trennverbindung zum Recycling, sondern auch die zuvor beschriebenen Zusatzfunktionen, die sich nicht allein über das Lösen der Trennverbindung, sondern auch durch Sollbruchstellen in der Außenlage realisieren lassen.

Nach der Erfindung sind zumindest zwei Lagen, eine Innenlage und eine Außenlage, für eine Schlauchbeutelverpackung vorgesehen. Bei der Bildung der Längsnaht erhält die Innenlage eine dichte und mechanisch stabile Innenflosse und zugleich werden auf die Innenflosse beidseits Randstreifen der Außenlage wiederablösbar zumindest auf einem Teil der Längsnaht gefügt. Dadurch sind nach Nutzung der Schlauchbeutelverpackung eine vollständige Trennung der Lagen und deren erleichtertes Recycling nach Materialien getrennt möglich. Die zuvor beschriebenen Zusatzfunktionen und Nutzungsmöglichkeiten werden insbesondere mit einer erfindungsgemäß ausgeführten Längsnaht realisiert.

Die Innenlage kann aus einem Monomaterial oder einem mehrschichtigen Material bestehen. Stellt das Packgut besonders hohe Anforderungen an die Packungsdichtigkeit einschließlich einer Vermeidung von Diffusion durch den Packstoff hindurch, kann hier auch ein Verbund von mehreren Schichten gewählt werden, der z. B. zusätzlich noch eine Barriereschicht aufweist. Allerdings verwirklicht die Erfindung besondere Vorteile beim Einsatz eines Monomaterials. Dieses kann einerseits durch die Trennung der Lagen sortenrein dem Recycling zugeführt werden.

Andererseits stellt ein Monomaterial, z. B. Mono-PE, ein erhebliches Problem bei der Verarbeitung auf einer Schlauchbeutelmaschine dar, weil sich der Siegelvorgang schwierig gestaltet. Nach dem Stand der Technik wird Abhilfe gesucht, indem Materialverbunde verwendet werden. Die mechanisch untrennbare Kombination unterschiedlicher Polymere mit verschiedenen Schmelzpunkten verhindert ein Verkleben der äußeren Schicht mit der Siegelbacke, indem dort ein hitzebeständigeres Material verwendet wird, erschwert aber zugleich ein getrenntes Recycling dieser Komponenten erheblich.

Die vorliegende Erfindung löst diesen Widerspruch, denn die erfindungsgemäß vorgesehene, zugleich getrennt rezyklierbare Außenlage übernimmt eine zusätzliche Schutzfunktion für die temperaturempfindliche Innenlage aus PE beim Siegelvorgang. Eine unkomplizierte Verarbeitung von sehr kostengünstiger Mono-PE-Folie auf an sich bekannten Schlauchbeutelmaschinen wird somit durch die vorliegende Erfindung überhaupt erst möglich.

Hinzu kommt, dass Verpackungen aus Mono-PE-Folie in der Regel bisher für Produkte mit untergeordneter optischer Anmutung der Verpackung verwendet werden. Nicht zuletzt liegt dies auch darin begründet, dass PE schlecht bedruckbar ist. Auch hierfür schafft die Erfindung Abhilfe, indem als Außenlage ein gut bedruckbares Material verwendet werden kann.

Nach einer ersten Ausführungsform ist die komplette Längsnaht mit zumindest der Innenlage und an den Außenseiten der Längsnaht angefügten Innenseiten der Außenlage als eine umgelegte Flossennaht ausgeführt. Die Außenlage wird dann mit der Innenlage zusammen als Flossennaht umgeklappt.

Nach einer zweiten Ausführungsform ist die Längsnaht zumindest der Innenlage, evtl. weitere Lagen, jedoch außer der Außenlage, als eine umgelegte Flossennaht ausgeführt. Auch hierbei wird die umgelegte Flossennaht mit den beiden Randstreifen der Außenlage verbunden, allerdings in der Weise, dass eine erste Seite der Flossennaht mit einer Außenseite und eine zweite Seite der Flossennaht der Innenseite der Außenlage verbunden werden. Dadurch wird die Außenlage nicht mit der Flossennaht umgekippt und es wird weniger Material benötigt.

Bevorzugt erfolgt die Bildung der Längsnaht durch Wärmekontaktsiegeln. Dabei wird das Material der zu verbindenden bzw. zu siegelnden Lagen oder eine hierfür gesondert aufgebrachte Materialschicht durch Wärme aus dem Siegelbacken aufgeschmolzen und durch dieselben Siegelbacken unter Druck verschweißt.

Nach einer ersten Ausführungsform erfolgt das Zusammenführen der Bahnen, aus denen die Lagen im Bereich von Längsnaht und Quernaht gebildet werden, unmittelbar nach der Entspeicherung von den einzelnen Rollen. Die zusammengeführten Bahnen werden dann gemeinsam durch die Maschine geführt bis einschließlich zur Bildung des Schlauchs.

Alternativ dazu werden nach einer zweiten Ausführungsform die Bahnen von der jeweiligen Packstoffrolle entnommen bzw. entspeichert und einzeln durch die Maschine geführt. Erst unmittelbar vor der Formung des Schlauchs werden sie zusammengeführt und gemeinsam über eine Formschulter geführt. Als weitere Alternative der ersten oder der zweiten Ausführungsform ist ein zusätzliches Umformorgan für jede zusätzliche Bahn vorgesehen, das die Schlauchbildung der zusätzliche Lage erleichtert und auf deren spezielle Materialeigenschaften zugeschnitten ist, ohne eine gesonderte Formschulter zu erfordern. Dies verbessert die Schlauchbildung und vermindert den Aufwand und den Platzbedarf der Maschine.

Als eine weitere Alternative werden nach einer dritten Ausführungsform die Bahnen einzeln, so wie bei der zweiten Ausführungsform auch, zu jeweils einer Formschulter für jede Bahn geführt. Die dort gebildeten Schläuche werden danach ineinander überführt. Bevorzugt sind die Formschultern in Schlauchachse, insbesondere übereinander im Falle einer Vertikalschlauchbeutelmaschine angeordnet. In diesem Fall benötigt eine Außenbahn für die Außenlage mit einer Ausnehmung eine Stützung bei der Bildung des Schlauchs in der Formschulter, beispielsweise durch eine Hilfslage, da es anderenfalls zum Verhaken der Ausnehmung in der Formschulter kommen kann.

Nach einer vierten, alternativen Ausführungsform sind die Innenbahn und die Außenbahn gemeinsam übereinander auf einer Packstoffrolle gespeichert, ohne dass eine stoffliche oder andere Verbindung zwischen den beiden Packstofflagen besteht. Beide Bahnen werden gemeinsam über die Formschulter geführt.

Zur Realisierung einer lösbaren Verbindung zwischen Außenlage und Innenlage beim Wärmekontaktsiegeln ein Packstoffaufbau der Lagen vorgesehen ist, der an seiner Innenseite einen niedrigeren Schmelzpunkt als an seiner Außenseite aufweist, sodass die Innenseiten durch eine dichte und mechanisch stabile Siegelung verbunden werden und die Innenseiten Außenlage mit den Außenseiten der Innenlage wiederablösbar verbunden werden. Die Außenlage ist beständig gegenüber Erhitzen im Bereich der Siegeltemperatur der Innenschicht ausgeführt, sodass beispielsweise eine erhöhte Siegeltemperatur, die schneller durch die Außenlage hindurchdringt, für die erfindungsgemäße Verbindung sorgen kann und die Außenlage dadurch nicht beschädigt wird.

Nach einer vorteilhaften Ausführungsform weisen die Außenlage oder zusätzlich eine der folgenden Lagen außer der Innenlage wenigstens eine Ausnehmung auf, durch die die nach innen hin folgende Lage oder die Innenlage der mehrlagigen Schlauchbeutelverpackung sichtbar ist. Die Ausnehmung bereits vorgefertigt vorliegen, als bei der Fertigung der Lage eingebracht worden sein, oder die Ausnehmung wird nach dem Entspeichern von der Packstoffrolle innermaschinell ausgebildet, durch eine geeignete Schneideinrichtung, z. B. eine Laserschneideinrichtung. Dadurch kann die Ausnehmung für jede Packung individuell hergestellt werden.

Entsprechendes gilt für die Bedruckung. Die Außenlage kann vorab bei der Fertigung der Lage bedruckt werden, wie nach dem Stand der Technik üblich. Alternativ ist eine innermaschinelle Bedruckung der Außenlage vorgesehen, die vor dem Zusammenführen mit der Innenlage oder der weiteren Lagen erfolgt. Dadurch kann die Gestaltung jeder Packung individuell hergestellt werden. Ebenso ist eine Quernaht mit oder ohne Eurolochstanzung vorgesehen.

Ein Aspekt, der nicht Teil der vorliegenden Erfindung ist, betrifft eine Vorrichtung zur Herstellung einer mehrlagigen Schlauchbeutelverpackung, bei der eine separate Zuführung der Lagen zur Ausbildung eines mehrlagigen Schlauchs, die Bildung eines Schlauchs und eine Längssiegeleinheit zur Bildung einer Längsnaht vorgesehen ist. Die Längssiegeleinheit ist in der Weise ausgeführt und wird derart gesteuert, dass mit der Längsnaht an der Innenlage eine dichte und mechanisch stabile Innenflosse gebildet und zugleich auf die Innenflosse beidseits Randstreifen der Außenlage wiederablösbar, zumindest auf einem Teil der Längsnaht angefügt werden. Nach Nutzung der Schlauchbeutelverpackung ist dadurch eine vollständige Trennung der Lagen möglich.

Der Packstofftransport durch den Hauptabzuges, insbesondere nach der Formschulter angeordnet, erfolgt beispielsweise mittels Vakuumriemen, auch als Abzugsbänder bezeichnet, die an der Außenlage angreifen. Der Transport der Innenlage wird in dem Fall dadurch realisiert, dass die Innenlage mit der Außenlage zumindest im Bereich der Längsnaht verbunden ist. Zur Unterstützung dieser des Packstofftransports könnte die Längsnahtsiegelung oberhalb des Hauptabzuges angeordnet sein. Bevorzugt ist deshalb die Längssiegeleinheit oberhalb von Vakuum beaufschlagten Abzugsbändern angeordnet, damit bereits eine Verbindung zwischen den Lagen hergestellt werden kann, bevor die Abzugsbänder die Außenschicht greifen. Durch die so erreichte stoffschlüssige Verbindung der Lagen erfolgt der Abzug aller Lagen gemeinsam.

Nach einer alternativen Ausführungsform, bei der die vorab hergestellte Verbindung zwischen den Lagen verzichtbar wäre, ist es vorgesehen, den Hauptabzug durch die Verwendung eines Zangenabzuges zu realisieren. Dazu wird eine Quersiegeleinheit, die zum Verschluss des Schlauchbeutels quer zur Schlauchachse durch eine Quersiegelung erforderlich ist, zusätzlich als Abzugseinheit ausgeführt. Auch auf diese Weise erfolgt ein gleichzeitiger Transport von allen durch die Quersiegelung verbundenen Lagen, ggf. doppelt gesichert durch Längs- und Quernaht.

Eine besonders vorteilhafte Art des Hauptabzugs, kombiniert mit der Herstellung der Längsnaht, erfolgt mittels Abzugsrollen, die bevorzugt beheizt, besonders bevorzugt dauerbeheizt sind. Mit diesen lässt sich eine kontinuierliche Längsnaht herstellen, indem aus den zu verbindenden Lagen eine Flosse gebildet wird, die zwischen den Abzugsrollen durchläuft und dabei durch die Abzugsrollen gesiegelt wird. Ist ein Heißsiegeln vorgesehen, sind die Abzugsrollen beheizt bzw. dauerbeheizt. An der Flosse erfolgt zugleich der Weitertransport der Lagen, da die Rollen angetrieben sind oder wenigstens eine angetriebene Abzugsrolle vorgesehen ist und in die dazwischen geklemmte Flossennaht eine Zugkraft eintragen.

Sind die Abzugsrollen nicht dauerbeheizt, erfolgt die Beheizung intermittierend oder mit wechselnden Temperaturen, beispielsweise entsprechend der über die Längsnaht vorgesehenen variierenden Nahtfestigkeit der Siegelnaht. Hierzu weisen die Abzugsrollen eine hochdynamische innere Heizung auf, beispielsweise auf Basis von Keramiken mit geringer Wärmekapazität, die sowohl als Material der Rollen als auch der elektrischen Heizung verwendet werden und einen schnellen Wechsel der Temperaturen an der Oberfläche der Rollen ermöglicht. Alternativ dazu werden Abzugsrollen mit einem Umfang, der der Nahtlänge entspricht, gewählt, sodass die unterschiedlichen Zonen am Umfang permanent auf der jeweiligen Temperatur gehalten werden können. Weiterhin ist eine passive Beheizung der Abzugsrollen von außen vorgesehen. Entsprechendes gilt für die Nahtform durch Profilierung des Umfangs der Abzugsrollen und für den Anpressdruck.

Daneben sind Abzugsrollen vorgesehen, die neben dem Heißsiegeln für andere Arten des Wärmekontaktsiegelns ausgestattet sind, wie für das Ultraschallsiegeln, das Induktionssiegeln oder das Kapazitivsiegeln. Auch Kaltsiegeln ist vorgesehen.

Ein weiterer, nicht zur Erfindung gehöriger Aspekt betrifft ein Packmittel, umfassend wenigstens eine mehrlagige Naht. Dabei sind wenigstens drei Lagen Packstoff nach einem Verfahren, wie zuvor und gemäß einem der Ansprüche 1 bis 15 beschrieben, verbunden. Insbesondere umfasst das Packmittel eine mehrlagige Schlauchbeutelverpackung.

Als Beutelquerschnitt sind ein Flachbeutel, ein Seitenfaltenbeutel, ein Siegelrandbeutel oder ein Standbodenbeutel vorgesehen, wobei die Quernaht mit oder ohne Eurolochstanzung vorgesehen ist. Weiterhin ist eine Bedruckung der Außenlage vorab vorgenommen oder innermaschinell ausgeführt worden, wobei eine Ausnehmung in der Außenlage vorab oder innermaschinell ausgeführt ist.

Zumindest eine Innenlage und eine Außenlage sind miteinander derart verbunden, dass die Siegelung der Längsnaht bei der Innenlage als eine dichte und mechanisch stabile Innenflosse ausgeführt und auf die Innenflosse zugleich die Außenlage als eine leicht lösbare Siegelverbindung aufgesiegelt ist. Dadurch ist nach Nutzung der Verpackung eine vollständige Trennung der Lagen möglich.

Es hat sich als vorteilhaft erwiesen, wenn die Innenschicht der Innenlage mit einem, niedrigeren Schmelzpunkt als die Außenseite ausgeführt ist und die Außenlage aus einem Material besteht, das beständig gegenüber einem Erhitzen im Bereich der Siegeltemperatur der Innenschicht ist. Durch die oben bereits beschriebenen resultierenden Effekte ist die Verbindung zwischen Außenlage und Innenlage lösbar.

Die mehrlagige Schlauchbeutelverpackung weist eine alle Lagen verbindende Längsnaht auf, die nach einer ersten Ausführungsform als eine umgelegte Flossennaht ausgeführt ist. Nach einer zweiten Ausführungsform ist die Innenlage als eine umgelegte Flossennaht ausgeführt ist und die Außenlage mit einem ersten Randbereich überlappend mit dieser verbunden, ohne dass die Außenlage nochmals umgeschlagen werden muss. Dies wird erreicht, indem die Außenlage mit einem ersten Randstreifen in die beim Umschlagen der Flossennaht entstandene Falte, demnach unter die Unterseite der Flossennaht, eingeschoben und eine Verbindung zwischen der Flossennaht und der Außenseite der Außenlage geschaffen wird. Der zweite Randstreifen der Außenlage wird auf die die Oberseite der Flossennaht gelegt, sodass eine Verbindung zwischen der Innenseite der Außenlage und der Oberseite der Flossennaht gebildet wird.

Als Beutelquerschnitte sindein Flachbeutel oder ein Seitenfaltenbeutel vorgesehen. Eine Quernaht ist mit oder ohne Eurolochstanzung vorgesehen. Eine Bedruckung der Außenlage liegt vorab vor oder ist innermaschinell ausgeführt. Eine Ausnehmung in der Außenlage ist vorab oder innermaschinell ausgeführt.

Vorteilhaft ist auch die Vermeidung einer Abklatschmigration, des unerwünschten Effekts einer Kontamination, die auftritt, wenn in einer gerollten Lage deren Innen- und Außenseite direkt übereinander bzw. aneinander liegen. Dabei können beispielsweise aus der Bedruckung der Außenseite Stoffe in die Innenseite wandern und später das Packgut kontaminieren. Ein Kontakt des Packguts mit der Außenlage wird vielmehr komplett ausgeschlossen.

Darüber hinaus wird ein sortenreines Recycling ermöglicht, da nach Gebrauch das Trennen der Lagen problemlos möglich ist.

Ein weiterer Aspekt, der nicht zu der vorliegenden Erfindung gehört, betrifft eine Vorrichtung zur Durchführung eines Verfahrens zur Herstellung einer mehrlagigen Naht eines Packmittels, wie es zuvor beschrieben wurde. Die Vorrichtung umfasst Einrichtungen zur Zuführung mehrerer Lagen von Packstoff sowie Einrichtungen zur Bildung des Packmittels, insbesondere eine Formschulter oder einen Formkasten sowie eine Längssiegeleinheit zur Bildung der Längsnähte und eine Quersiegeleinheit zur Bildung der Quernähte.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische Ansicht einer Ausführungsform einer Vorrichtung zur Herstellung einer mehrlagigen Schlauchbeutelverpackung;
Fig. 2: eine schematische Ansicht einer Ausführungsform einer Vorrichtung zur Herstellung einer mehrlagigen Schlauchbeutelverpackung mit getrennter Führung der Lagen;
Fig. 3: eine schematische Ansicht einer Ausführungsform einer Vorrichtung zur Herstellung einer mehrlagigen Schlauchbeutelverpackung mit getrennter Schlauchbildung;
Fig. 4: eine schematische Ansicht einer weiteren Ausführungsform einer Vorrichtung, ausgeführt als horizontale Schlauchbeutelmaschine;
Fig. 5: eine schematische Ansicht einer weiteren Ausführungsform einer Vorrichtung, ausgeführt als Standbeutelmaschine;
Fig. 6: eine schematische Ansicht einer Ausführungsform eines Hauptabzugs für eine Vorrichtung, ausgeführt als ein Vakuumriemenabzug;
Fig. 7: eine schematische Ansicht einer Ausführungsform eines Hauptabzugs für einen Vorrichtung ausgeführt als ein Zangenabzug;
Fig. 8: eine schematische Ansicht einer Ausführungsform eines Hauptabzugs für einen Vorrichtung ausgeführt als dauerbeheizte Abzugsrollen;
Fig. 9: eine schematische Schnittdarstellung einer Ausführungsform einer Schlauchbeutelverpackung mit einer ersten Ausführung einer Flossennaht;
Fig. 10: eine schematische Schnittdarstellung einer Ausführungsform einer Schlauchbeutelverpackung mit einer zweiten Ausführung einer Flossennaht;
Fig. 11: eine schematische Schnittdarstellung eines Schlauchbeutels mit Detaildarstellungen von Wand und Quernaht;
Fig. 12: eine schematische perspektivische Ansicht mit Schnittdarstellung in zwei Schnittebenen einer Ausführungsform einer mehrlagigen Schlauchbeutelverpackung, ausgeführt als Flachbeutel;
Fig. 13: eine schematische perspektivische Ansicht mit Schnittdarstellung in zwei Schnittebenen einer Ausführungsform einer mehrlagigen Schlauchbeutelverpackung, ausgeführt als Flachbeutel mit Sichtfenster und
Fig. 14: eine schematische perspektivische Ansicht mit Schnittdarstellung in zwei Schnittebenen einer Ausführungsform einer mehrlagigen Schlauchbeutelverpackung, ausgeführt als Seitenfaltenbeutel;
Fig. 15: eine schematische Schnittdarstellung einer Ausführungsform einer Flossennaht;
Fig. 16: eine schematische Schnittdarstellung einer weiteren Ausführungsform einer Flossennaht;
Fig. 17: eine schematische perspektivische Ansicht mit Schnittdarstellung eines mehrlagigen Siegelrandbeutels; und
Fig. 18: eine schematische perspektivische Ansicht mit Schnittdarstellung eines mehrlagigen Standbodenbeutel.

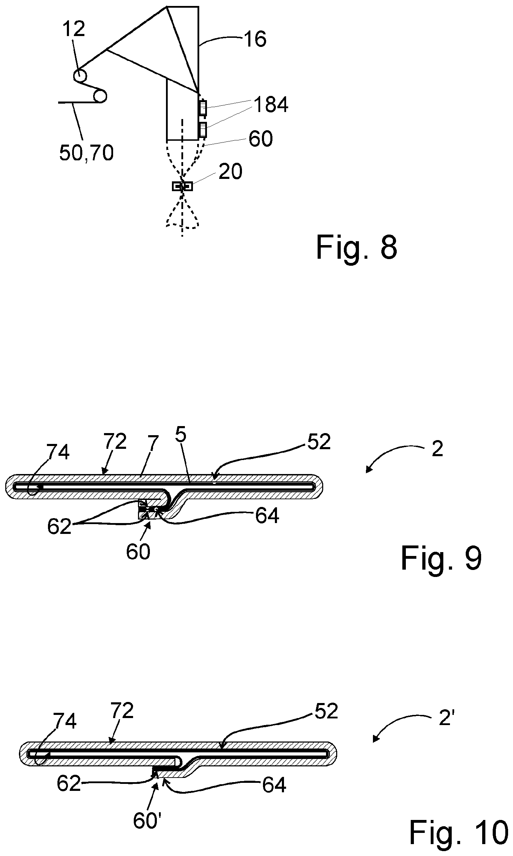

Fig. 1 zeigt eine schematische Ansicht einer Ausführungsform einer Vorrichtung 1 zur Herstellung einer mehrlagigen Schlauchbeutelverpackung 2, ausgeführt als eine vertikale Schlauchbeutelmaschine 102. Hierzu stehen zwei Bahnen auf jeweils einer Packstoffrolle 4, 6 zur Verfügung, auf der Packstoffrolle 4 die Innenbahn 50 zur Bildung der Innenlagen 5, 5' (vgl. Figuren 9 bis 18) und auf der Packstoffrolle 6 die Außenbahn 70 zur Bildung der Außenlagen 7 (vgl. ebenfalls Figuren 9 bis 18). Die Bahnen 50 und 70 werden bereits über der ersten Umlenkrolle 12 zusammengeführt und laufen danach gemeinsam durch die Maschine, die Vorrichtung 1. Dabei wird zunächst ein Tänzer 14 passiert, später erreichen die Bahnen 50 und 70 eine Formschulter 16, wo ein Schlauch mit einer Schlauchachse 17 gebildet wird. An diesem wird mittels einer Siegelbacke bzw. einer Längssiegeleinheit 18 eine Längsnaht gebildet, sodass ein geschlossener Schlauch entsteht. Um diesen in einzelne Schlauchbeutel 2 zu trennen, sind Siegelbacken einer Quersiegeleinheit 20 für die Quernaht 82 (vergleiche Figuren 6 bis 8) vorgesehen, wo zugleich ein Schlauchbeutel 2 vom nachfolgenden Schlauch getrennt wird. Zudem ist der Hauptabzug in der dargestellten Ausführungsform funktionell in die Quersiegeleinheit 20 für die Quernaht als Zangenabzug 21 integriert, in dem die Quersiegeleinheit 20 nach dem Ergreifen des Schlauchbeutels 2 diesen nach unten zieht.

Neben der Zuführung der Bahnen 50, 70 von jeweils einer Packstoffrolle 4, 6 ist es nach einer hiervon abgeleiteten Alternative vorgesehen, die Innenbahn 50 und die Außenbahn 70 gemeinsam und demnach zweilagig auf einer einzigen Packstoffrolle 4, 6 zu speichern und der Formschulter 16 zuzuführen. Die Innenbahn 50 und die Außenbahn 70 weisen dabei keine Verbindung miteinander auf.

Fig. 2 zeigt eine schematische Ansicht einer weiteren Ausführungsform einer Vorrichtung 1 zur Herstellung einer mehrlagigen Schlauchbeutelverpackung 2 mit getrennter Führung der Bahnen 50, 70 durch die vertikale Schlauchbeutelmaschine 104. Erst unmittelbar vor der Formschulter 16 werden die Bahnen 50 und 70 zusammengeführt. Um die Bildung des Schlauchbeutels 2 zu erleichtern, ist für die Innenbahn 50 ein gesondertes Umformorgan 26 an der Formschulter 16 angebracht. Damit erfolgt die Schlauchbildung der Innenbahn 50 durch das Umformorgan 26, während der Schlauch aus der Außenbahn 70 unmittelbar in der Formschulter 16 gebildet wird.

Fig. 3 zeigt eine schematische Ansicht einer weiteren Ausführungsform einer Vorrichtung 1 zur Herstellung einer mehrlagigen Schlauchbeutelverpackung 2 mit getrennter Schlauchbildung der einzelnen Bahnen 50 und 70, ausgeführt als eine vertikale Schlauchbeutelmaschine 106. Dabei erfolgt, neben der separaten Führung der beiden Bahnen, der Bahnen 50 und 70, durch die Maschine, auch die Schlauchbildung in zwei komplett getrennten Formschultern 16. Diese sind untereinander entlang der Schlauchachse 17 angeordnet, wodurch die aus der Innenbahn 50 und der Außenbahn 70 koaxial gebildeten Schläuche ineinander laufen, um dann in der erfindungsgemäßen Weise durch die Längssiegeleinheit 18 eine Längsnaht 60, 60' (vgl. beispielsweise Figuren 9 und 10) zu erhalten, ausgebildet als eine Flossennaht.

Fig. 4 zeigt eine schematische Ansicht einer weiteren Ausführungsform einer Vorrichtung 1, ausgeführt als horizontale Schlauchbeutelmaschine 108 zur Herstellung einer mehrlagigen Schlauchbeutelverpackung 220 zur regelmäßigen Verwendung in horizontaler Lage, zumeist zur Verpackung eines stückigen Packgutes 84, mit getrennter Schlauchbildung der einzelnen Bahnen 50, 70. Hierzu stehen zwei Bahnen 50, 70 auf jeweils einer Packstoffrolle 4, 6 zur Verfügung, auf der Packstoffrolle 4 die Innenbahn 50 und auf der Packstoffrolle 6 die Außenbahn 70. Die Bahnen 50 und 70 laufen an einer der Umlenkrollen 12 zusammen und werden danach weiter gemeinsam durch die Schlauchbeutelmaschine geführt. Auf einem Umformorgan, das als ein Faltkasten 16' ausgeführt ist, wird der Schlauch aus den Bahnen 50 und 70 geformt.

Für den Faltkasten 16' sind auch die alternativen Ausführungsformen vorgesehen, wie zu Fig. 1 für die Formschulter 16 beschrieben. So kann der Faltkasten 16' durch einen zweiten Faltkasten 16' für beide Bahnen 50 und 70 oder durch ein Umformorgan 26 ergänzt werden.

Weiterhin ist eine Ausführungsform einer Längssiegeleinheit, umfassend dauerbeheizte Abzugsrollen 184, vorgesehen, die die Längsnaht in Form einer Flossennaht 60 kontinuierlich ausbildet. Die Abzugsrollen 184 bilden gleichzeitig den Hauptabzug, da sie an der Flossennaht 60 angreifen und den Materialtransport übernehmen. Die Quersiegeleinheit 20 dient zur Herstellung der Quernaht 82.

Fig. 5 zeigt eine schematische Ansicht einer weiteren Ausführungsform einer Vorrichtung 1, ausgeführt als Standbeutelmaschine 110 zur Herstellung einer mehrlagigen Standbodenbeutelverpackung 260 (SUP). Die Bahnen 50 und 70 werden an einer Umlenkrolle 12 zusammengeführt und erfahren an Transportwalzen 12' eine vertikale Ausrichtung. Durch die Siegelorgane 18, 20 werden die erforderlichen Nähte, darunter zwei Längsnähte 63, hergestellt.

Die Figuren 6 bis 8 zeigen in schematischer Ansicht jeweils ein Detail einer Ausführungsform einer Vorrichtung 1 zur Herstellung einer mehrlagigen Schlauchbeutelverpackung 2, wobei das Detail den Weitertransport des aus den Lagen gebildeten Schlauchs betrifft.

Fig. 6 zeigt einen Hauptabzug, der als ein Vakuumriemenabzug 22 ausgeführt ist. Ein umlaufender Riemen weist Öffnungen auf, die durch Vakuum zumindest die Außenlage 7 greifen. Der umlaufende Riemen transportiert dadurch den anhaftenden Schlauch und zieht die Bahnen 50, 70 insgesamt durch die Formschulter 16 hindurch.

Nach Fig. 7 ist der Hauptabzug als ein Zangenabzug 21 gestaltet. Dazu fungiert die Quersiegeleinheit 20 als Zangenabzug 21, indem die Quersiegeleinheit 20 beim Siegeln den in der Formschulter gebildeten Schlauch aus den Bahnen 50, 70 greift und nach unten zieht.

Eine weitere Lösung für die Herstellung der Längsnaht und die Realisierung des Hauptabzugs zeigt Fig. 8 mit dauerbeheizten Abzugsrollen 184. Mit diesen lässt sich eine kontinuierliche Längsnaht 60 herstellen, indem eine Flosse, gebildet aus dem Rand der Bahnen 50, 70, zwischen den Abzugsrollen 184 durchläuft und dabei zu dem Schlauch gesiegelt wird. An der Flosse bzw. der Längsnaht 60 erfolgt zugleich der Weitertransport der Bahnen 50, 70.

Fig. 9 zeigt eine schematische Schnittdarstellung einer Ausführungsform einer Schlauchbeutelverpackung 2 mit einer ersten Ausführung einer als Flossennaht ausgeführte Längsnaht 60. Dabei ist die aus einem Bereich der Außenbahn 70 gebildete Außenlage 7, die eine Außenseite 72 und eine Innenseite 74 aufweist, mit ihrer Innenseite 74 beidseits der Flossennaht 62 der Innenlage 5, die einen Teil der Innenbahn 50 im Nahtbereich darstellt, angebracht und umgeschlagen. Dadurch ist die Flossennaht 62 komplett von der Außenlage 7 umschlossen. Allerdings sind dadurch im Bereich der Längsnaht 60, beispielsweise im Bereich einer Quernaht 82 (vergleiche Figuren 6 und 7), insgesamt 8 Materialschichten übereinander angeordnet. Eine stoffschlüssige Verbindung 64 im Bereich der Flossennaht 62 der Innenlage 5 ist als ein unlösbarer Stoffschluss ausgeführt, während die Verbindung zwischen der Außenseite 52 der Innenlage 5 und der Außenlage 7, insbesondere deren Innenseite 74, als ein lösbarer Stoffschluss ausgeführt ist.

Fig. 10 zeigt eine schematische Schnittdarstellung einer Ausführungsform einer Schlauchbeutelverpackung 2' mit einer zweiten Ausführung einer Flossennaht ausgeführten Längsnaht 60', mit der sich die Anhäufung von Materialschichten reduzieren lässt. Dazu wird die umgelegte Seite der Flossennaht 62 der Innenlage 5 mit der Außenseite 72 der Außenlage 7 in einem ersten Randbereich verbunden. Der zweite Randbereich der Außenlage 7 ist, so wie bei der Längsnaht 60 auch, mit der Innenseite 74 der Außenlage 7 direkt mit der Flossennaht 62 der Innenlage 5 verbunden. Mit dieser Ausführungsform wird gleichzeitig eine fest mit der Außenlage 7 verbundene Längsnaht 60' erreicht.

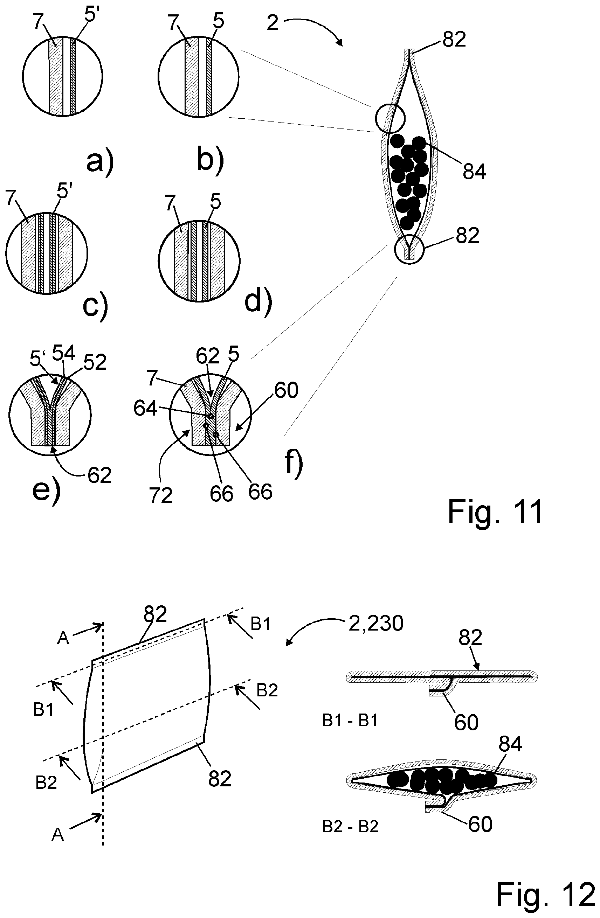

Fig. 11 zeigt eine schematische Schnittdarstellung eines Schlauchbeutels 2 mit Detaildarstellungen von Wand und Quernaht 82. In den Detaildarstellungen sind dabei zwei unterschiedliche Varianten der Innenlage 5 dargestellt, eine Innenlage 5' als mehrschichtiges Material in den Ansichten a), c) und e) sowie eine Innenlage 5 als Monomaterial in den Ansichten b), d) und f). Die Ansichten c) und d) zeigen den Bereich der Quernaht 82 vor dem Heißsiegeln, die Ansichten e) und f) nach dem Heißsiegeln und Abtrennen des zuvor hergestellten Schlauchbeutels 2.

Eine Innenlage 5' als mehrschichtiges Material kann erforderlich sein, wenn das Packgut besonders hohe Anforderungen an die Dichtigkeit stellt. In dem Fall kommt eine Barriereschicht zum Einsatz. Denkbar wäre auch eine anders als durch Wärme aktivierbare Innenseite 54 der Innenlage 5', wenn beispielsweise das Packgut die beim Heißsiegeln auftretende Wärmeeinwirkung nicht toleriert.

Insbesondere in den Ansichten a) und b), aber auch c) und d), ist zudem erkennbar, dass keine Verbindung zwischen der Außenlage 7 und der Innenlage 5 bzw. 5' besteht. Dies ermöglicht eine leichte Trennung, um ein sortengerechtes Recycling nach Gebrauch der Verpackung zu ermöglichen. Diese Trennung ist jedoch nicht nur im Bereich der Beutelwand vorgesehen, sondern auf besonders vorteilhafte Weise gleichfalls im Bereich der hier nicht dargestellten Längsnaht sowie auch der Quernaht 82.

Die Quernaht 82, wie sie in den Detaildarstellungen e) und f) gezeigt wird, weist eine Flossennaht 62 der Innenlage 5 auf, die mittels einer nichtlösbaren stoffschlüssigen Verbindung 64 mechanisch stabil und dicht ausgeführt ist. Demgegenüber ist zwischen der Außenseite 52 der Innenlage 5 bzw. 5' und der Innenseite 74 der Außenlage 7 eine lösbare stoffschlüssige Verbindung 66 vorgesehen. Damit ist nach Gebrauch der Verpackung der Schlauchbeutel 2 in seine beiden aus unterschiedlichen Materialien bestehenden Komponenten, die Innenlage 5 bzw. 5' und die Außenlage 7, problemlos zu trennen. Darüber hinaus bietet die Außenlage 7 einen thermischen Schutz gegenüber den von der Außenseite 72 der Außenlage 7 angreifenden Siegelbacken, was für Längsnaht 60, 60'(vergleiche Figuren 9 und 10) und Quernaht 82 gleichermaßen gilt. Erst dieser Aufbau erleichtert eine Verarbeitung einer Innenlage 5 aus einem empfindlichen Monomaterial, wie in Darstellung d) und f) gezeigt.

Fig. 12 zeigt eine schematische perspektivische Ansicht mit Schnittdarstellung in drei Schnittebenen A, B1 und B2 einer Ausführungsform einer mehrlagigen Schlauchbeutelverpackung, ausgeführt als Flachbeutel 230. Der Schnitt B1-B1 verläuft durch die Quernaht 82 und zeigt auch die Flossennaht 60 (vergleiche Fig. 9). Der Schnitt B2-B2 zeigt den Flachbeutel 230 mit enthaltenem Packgut 84 und ebenfalls der Flossennaht 60.

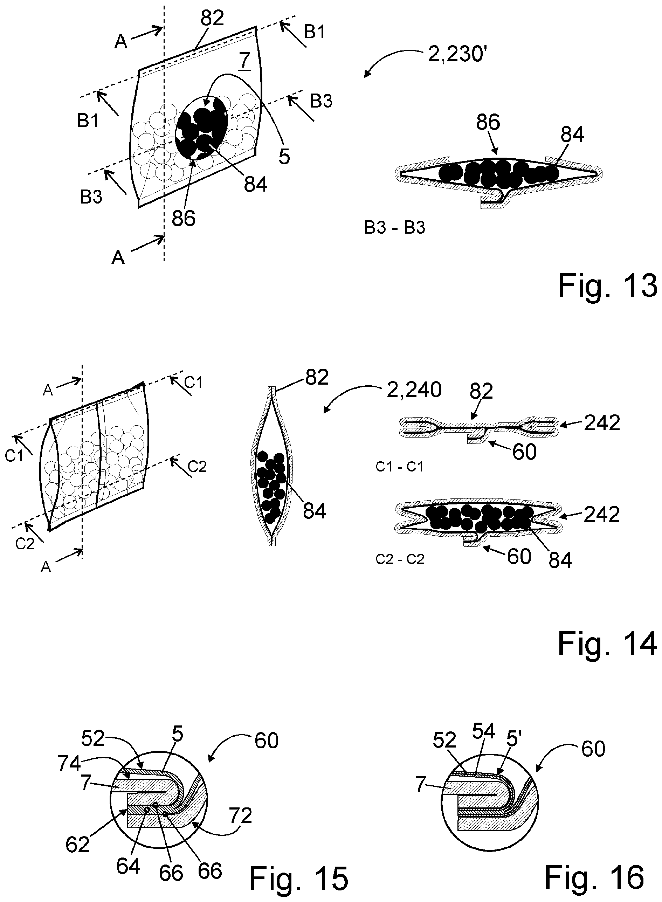

Fig. 13 zeigt eine schematische perspektivische Ansicht mit Schnittdarstellung in drei Schnittebenen A, B1 und B3 einer weiteren Ausführungsform einer mehrlagigen Schlauchbeutelverpackung, ausgeführt als Flachbeutel 230' mit Sichtfenster. Das Sichtfenster 86 wird durch eine Ausnehmung in der Außenlage 7 gebildet. Ist die Ausnehmung bereits in der Außenlage 7, so wie sie auf der Packstoffrolle 6 (vergleiche Figuren 1 bis 3) vorliegt, vorbereitet, muss eine genaue Positionierung bei der Bildung der Quernaht 82 gewährleistet sein. Es ist ebenso vorgesehen, die Ausnehmung unmittelbar vor der Bildung des Schlauchs einzubringen, womit eine erhöhte Flexibilität in Form und Lage der Ausnehmung gegeben ist. Die Ausnehmung kann dann beispielsweise mittels einer Laserschneideinrichtung in die Außenlage 7 eingebracht werden.

Durch das Sichtfenster 86 ist die Innenlage 5, hier aus einem durchsichtigen Packstoff ausgeführt, sichtbar und damit wird zugleich der Blick auf das Packgut 84 freigegeben. Die Schnittdarstellung B3-B3 verdeutlicht dies. Damit sind die Funktionen der Außenlage 7, beispielsweise eine erhöhte mechanische Festigkeit und eine gute Bedruckbarkeit, für den größten Teil der Packung gewährleistet und dennoch wird der unmittelbare Blick auf das Packgut 84 nicht versperrt.

Fig. 14 zeigt eine schematische perspektivische Ansicht mit Schnittdarstellung in drei Schnittebenen A, C1 und C2 einer weiteren Ausführungsform einer mehrlagigen Schlauchbeutelverpackung, ausgeführt als Seitenfaltenbeutel 240. Dieser weist die charakteristische Seitenfalte 242 auf, wie insbesondere auch in den Schnittdarstellungen C1-C1 und C2-C2 erkennbar ist. Dort ist wiederum die Lage der Flossennaht 60 sichtbar. Der Schnitt A-A zeigt neben den Quernähten 82 auch das Packgut 84.

Fig. 15 zeigt eine schematische vergrößerte Schnittdarstellung einer Ausführungsform der als Flossennaht ausgeführten Längsnaht 60, wo zwei Innenlagen 5 und zwei Außenlagen 7 zusammengeführt sind. Die Innenlagen 5 bilden nach dem Heißsiegeln die Flossennaht 62 der Innenlage 5 mit der nicht lösbaren stoffschlüssigen Verbindung 64. Beidseits der Flossennaht 62, an der Außenseite 52 der Innenlage 5, ist die Außenlage 7 mit ihrer Innenseite 74 angefügt. Diese Verbindung stellt eine lösbar stoffliche Verbindung 66 dar, das Lösen der stofflichen Verbindung 66 erfolgt zum Recycling nach Gebrauch der Verpackung.

Fig. 16 zeigt eine schematische vergrößerte Schnittdarstellung einer weiteren Ausführungsform einer Längsnaht 60 entsprechend der Fig. 15, jedoch unter Einsatz einer Innenlage 5' aus einem mehrschichtigen Material, verbunden mit der Außenlage 7.

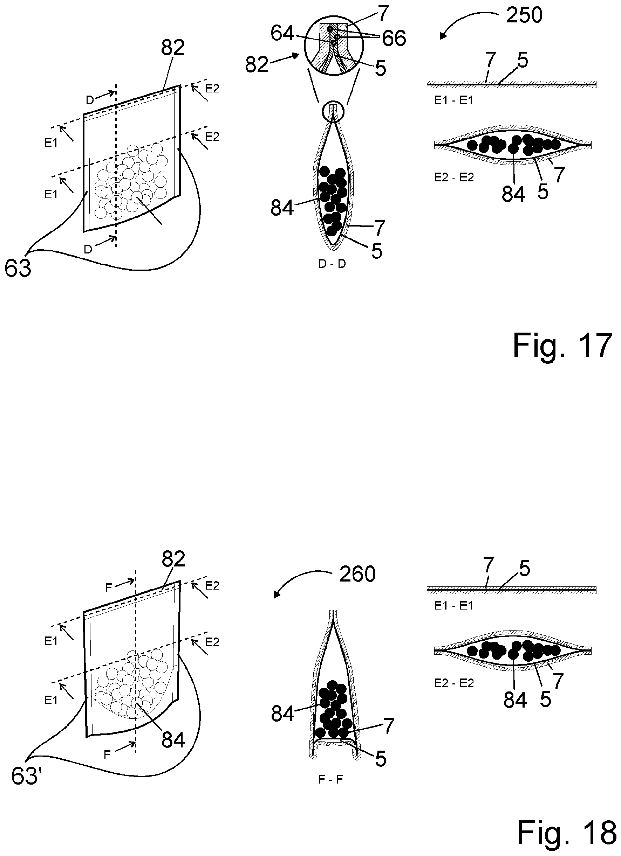

Fig. 17 zeigt eine schematische perspektivische Ansicht mit Schnittdarstellung in drei Schnittebenen D, E1 und E2 einer weiteren Ausführungsform einer mehrlagigen Schlauchbeutelverpackung, ausgeführt als Siegelrandbeutel 250. Dieser weist Längsnähte 63 und eine Quernaht 82 auf. Die Nähte 63, 82 sind aufgebaut wie zuvor bei den anderen Beutelarten (vgl. v. a. Figuren 11 bis 16) beschrieben und weisen die gesiegelten Lagen 5 und 7 auf, wobei zwischen den Innenlagen 5 eine Verschlussverbindung 64 entsteht. Diese ist bevorzugt nicht lösbar, so dass der Siegelrandbeutel 250 zur Entnahme des Packguts 84 aufgeschnitten wird. Die zwischen Außenlage 7 und Innenlage 5 gebildete Trennverbindung 66 ist entsprechend lösbar ausgeführt, sodass nach der Entnahme des Packguts 84 die zu entsorgende Packung in die Lagen 5 und 7 getrennt werden kann.

Es ist auch vorgesehen, die Verschlussverbindung 64 lösbar auszuführen, beispielsweise ausgeführt als ein peelbarer Verschluss. In dem Fall müssen solche Nahtfestigkeiten eingestellt werden, dass sich zunächst die Verschlussverbindung 64 öffnen lässt, um das Packgut 84 entnehmen zu können, wobei aber der Verbund zwischen Innenlage 5 und Außenlage 7, die Trennverbindung 66, bestehen bleiben soll. Erst zur recyclinggerechten Trennung der Innenlage 5 von der Außenlage 7 soll die Trennverbindung 66 getrennt werden können.

Fig. 18 zeigt eine schematische perspektivische Ansicht mit Schnittdarstellung in drei Schnittebenen F, E1 (Schnitte durch die Beutelmitte) und E2 (Schnitt durch die Quernaht 82) einer weiteren Ausführungsform einer mehrlagigen Schlauchbeutelverpackung, ausgeführt als Standbodenbeutel 260. Dieser weist Längsnähte 63' und eine Quernaht 82 auf, die nach Befüllen mit dem Packgut 84 verschlossen wird. Die Nähte 63, 82 sind aufgebaut wie zuvor bei anderen Beutelarten beschrieben und weisen die gesiegelten Lagen 5 und 7 auf, wobei zwischen den Innenlagen 5 eine Verschlussverbindung 64 entsteht.

### Bezugszeichenliste

- 1: Vorrichtung
- 2: flexible Beutelverpackung
- 4: Packstoffrolle Innenbahn
- 5,: Innenlage (Monomaterial)
- 5': Innenlage (mehrschichtiges Material)
- 6: Packstoffrolle Außenbahn
- 7: Außenlage
- 12: Umlenkrolle
- 12': Transportwalze
- 14, 14': Tänzer
- 16: Formschulter
- 16': Faltkasten
- 17: Schlauchachse
- 18: Siegelorgan; Längssiegeleinheit
- 20: Siegelorgan; Quersiegeleinheit; Siegelbacke Quernaht
- 21: Zangenabzug (als Hauptabzug)
- 22: Vakuumriemenabzug (als Hauptabzug)
- 26: Umformorgan
- 50: Innenbahn
- 52: Außenseite Innenlage
- 54: Innenseite Innenlage
- 60, 60': Längsnaht, Flossennaht
- 62: Innenflosse, Flossennaht Innenlage
- 63: Längsnaht Siegelrandbeutel
- 63': Längsnaht Standbodenbeutel
- 64: Verschlussverbindung
- 66: Trennverbindung
- 70: Außenbahn
- 72: Außenseite Außenlage
- 74: Innenseite Außenlage
- 82: Quernaht
- 84: Packgut
- 86: Ausnehmung
- 102: vertikale Schlauchbeutelmaschine
- 104: vertikale Schlauchbeutelmaschine
- 106: vertikale Schlauchbeutelmaschine
- 108: horizontale Schlauchbeutelmaschine
- 110: Standbeutelmaschine
- 182: Längssiegeleinheit (Siegelbacke für Längsnaht)
- 184: Abzugsrolle (als Längssiegeleinheit; dauerbeheizt)
- 186: Längssiegeleinheit: Siegelbacke Längsnaht
- 210: Schlauchbeutel (vertikal)
- 220: Schlauchbeutel (horizontal)
- 230: Flachbeutel
- 240: Seitenfaltenbeutel
- 242: Seitenfalte
- 250: Siegelrandbeutel
- 260: Standbodenbeutel

## Patentansprüche

1. Verfahren zur Herstellung einer mehrlagigen Naht eines Packmittels, wobei wenigstens drei Lagen Packstoff, zwei Innenlagen (5, 5') und wenigstens eine Außenlage (7), derart verbunden werden, dass wenigstens eine erste Teilnaht zwischen den zwei Innenlagen (5, 5') hergestellt wird, die eine erste Nahtfestigkeit aufweist, und eine im Wesentlichen in derselben Position wie die wenigstens eine erste Teilnaht angeordnete, wenigstens eine zweite Teilnaht zwischen wenigstens zwei Lagen, einer der Innenlagen (5, 5') und einer der Außenlagen (7), hergestellt wird, die eine zweite Nahtfestigkeit aufweist, **dadurch gekennzeichnet, dass** die erste und die zweite Nahtfestigkeit durch die Bindungseigenschaften wenigstens einer der Oberflächen oder des Materials der Innenlagen und der wenigstens einen Außenlage zumindest im Bereich der wenigstens einen ersten Teilnaht und/oder der wenigstens einen zweiten Teilnaht derart ausgeführt werden, dass durch die erste Teilnaht eine Verschlussverbindung (64) für einen ersten Nutzungszyklus und durch die zweite Teilnaht eine beim Lösen der Verschlussverbindung (64) durch Trennung der Innenlagen voneinander zum Öffnen des Packmittels nicht lösbare, während eines zweiten Nutzungszyklus' jedoch lösbare Trennverbindung (66) gebildet werden.

2. Verfahren nach Anspruch 1, wobei der erste Nutzungszyklus das Öffnen des Packmittels (2, 210, 220, 230, 240, 250, 260) außerhalb der Verschlussverbindung oder das Lösen der Verschlussverbindung (64) durch eine Trennung der Innenlagen (5, 5') voneinander zum Öffnen des Packmittels (2, 210, 220, 230, 240, 250, 260) und der zweite Nutzungszyklus eine Trennung der Innenlagen (5, 5') von der wenigstens eine Außenlage (7) zumindest in unterschiedliche Packstoffe durch Lösen der Trennverbindung (66) umfasst.

3. Verfahren nach einem der vorherigen Ansprüche, wobei die mehrlagige Naht als Siegelnaht durch ein Verfahrens des Wärmekontaktsiegelns oder durch Kaltsiegeln ausgeführt wird.

4. Verfahren nach Anspruch 3, wobei zur Realisierung der mehrlagigen Naht mit Ausbildung einer lösbaren Trennverbindung (66) zwischen Außenlage (7) und Innenlage (5, 5') beim Wärmekontaktsiegeln ein Packstoffaufbau der Lagen (5', 7) vorgesehen ist, der an einer Innenseite (54) der Innenlage (5') einen niedrigeren Schmelzpunkt als an seiner Außenseite (52) aufweist, sodass die Innenseiten durch eine dichte und mechanisch stabile Verschlussverbindung (64) verbunden werden und die Innenseiten (74) der Außenlage (7) mit den Außenseiten (52) der Innenlage (5') wiederablösbar durch die Trennverbindung (66) verbunden werden.

5. Verfahren nach einem der vorherigen Ansprüche, wobei wenigstens eine der mehrlagigen Nähte, die die Verschlussverbindung (64) und die Trennverbindung (66) bilden, an einer mehrlagigen Schlauchbeutelverpackung (2, 210, 220, 230, 240, 250, 260) ausgeführt wird.

6. Verfahren nach einem der vorherigen Ansprüche, wobei die Nähte zur Herstellung der mehrlagigen Schlauchbeutelverpackung (2, 210, 220, 230, 240, 250, 260), bei dem die mehreren Lagen (5, 5', 7) zur Ausbildung eines mehrlagigen Schlauchs in einem ersten Schritt separat zugeführt werden, in einem zweiten Schritt der Schlauch geformt, in einem dritten Schritt eine Längsnaht (60, 60') gebildet wird, wodurch der Schlauch längs geschlossen wird, und in einem vierten Schritt die Quernaht (82) gebildet wird, die nach den Befüllen mit einem Packgut und gemeinsam mit der im vorausgehenden Takt gebildeten Quernaht (82) aus dem Schlauch die Schlauchbeutelverpackung (2, 210, 220, 230, 240, 250, 260) bildet, wobei zumindest zwei Lagen, eine Innenlage (5, 5') und eine Außenlage (7), vorgesehen sind, wobei mit Bildung der Längsnaht (60, 60') die Innenlage (5, 5') eine dichte und mechanisch stabile Innenflosse (62) erhält und zugleich auf die Innenflosse (62) beidseits Randstreifen der Außenlage (7) wiederablösbar, zumindest auf einem Teil der Längsnaht (60, 60'), gefügt werden, sodass nach Nutzung der Schlauchbeutelverpackung (2, 210, 220, 230, 240, 250, 260) eine vollständige Trennung der Innenlage (5, 5') von der Außenlage (7) möglich ist.

7. Verfahren nach Anspruch 6, wobei nach einer ersten Ausführungsform die komplette Längsnaht (60, 60') mit zumindest der Innenlage (5, 5') und an den Außenseiten der Längsnaht (60, 60') angefügten Innenseiten (74) der Außenlage (7) als eine umgelegte Flossennaht (60) ausgeführt wird oder nach einer zweiten Ausführungsform die Längsnaht (60, 60') zumindest der Innenlage (5, 5') als eine umgelegte Flossennaht (60') ausgeführt wird, mit der die beiden Randstreifen der Außenlage (7) verbunden werden, sodass eine erste Seite der Flossennaht (60') mit einer Außenseite (72) und eine zweite Seite der Flossennaht (60') der Innenseite (74) der Außenlage (7) verbunden wird.

8. Verfahren nach Anspruch 6 oder 7, wobei nach einer ersten Ausführungsform die Zusammenführung der Innenlage (5, 5') mit der Außenlage (7) unmittelbar nach der Entspeicherung von den einzelnen Packstoffrollen (4, 6) erfolgt oder nach einer zweiten Ausführungsform die Innenlage (5, 5') und die Außenlage (7) einzeln geführt und erst unmittelbar vor der Formung des Schlauchs zusammengeführt und gemeinsam über eine Formschulter (16) geführt werden, oder nach einer dritten Ausführungsform die der Innenlage (5, 5') und die Außenlage (7) einzeln zu jeweils einer Formschulter (16, 16') für jede Lage (5, 5', 7) geführt und die dort gebildeten Schläuche danach ineinander überführt werden, oder nach einer vierten Ausführungsform die Innenlage (5, 5') und die Außenlage (7) gemeinsam übereinander auf einer Packstoffrolle (4, 6) gespeichert sind und gemeinsam über die Formschulter (16) geführt werden.

9. Verfahren nach einem der Ansprüche 6 bis 8, wobei die Außenlage (7) oder zusätzlich einer der folgenden Lagen außer der Innenlage (5, 5') wenigstens eine Ausnehmung (86) aufweisen, durch die die nach innen hin folgende Lage oder die Innenlage (5, 5') der mehrlagigen Schlauchbeutelverpackung (2, 210, 220, 230, 240, 250, 260) sichtbar ist, und wobei die Ausnehmung (86) bereits vorgefertigt vorliegt oder nach dem Entspeichern von der Packstoffrolle (6) innermaschinell ausgebildet wird.

10. Verfahren nach einem der Ansprüche 6 bis 9, wobei die Außenlage (7) innermaschinell und vor dem Zusammenführen mit der Innenlage (5, 5') oder weiteren Lagen bedruckt wird.

11. Verfahren nach einem der Ansprüche 6 bis 10, wobei eine die Lagen (5, 5', 7) zur Ausbildung eines mehrlagigen Schlauchs separat zugeführt werden, der Schlauch in wenigstens einer Formschulter (16) gebildet wird und eine Längssiegeleinheit (18) eine Längsnaht (60, 60') bildet, wobei eine Quersiegeleinheit (20) eine Quernaht (82) bildet, die nach den Befüllen mit einem Packgut und gemeinsam mit der im vorausgehenden Takt gebildeten Quernaht (82) aus dem Schlauch die Schlauchbeutelverpackung (2, 210, 220, 230, 240, 250, 260) bildet, wobei die Längssiegeleinheit (18) in der Weise gesteuert wird, dass mit der Längsnaht (60, 60') an der Innenlage (5, 5') eine dichte und mechanisch stabile Innenflosse (62) gebildet und zugleich auf die Innenflosse (62) beidseits Randstreifen der Außenlage (7) wiederablösbar, zumindest auf einem Teil der Längsnaht (60, 60') angefügt werden, sodass nach Nutzung der Schlauchbeutelverpackung eine vollständige Trennung der Innenlage (5, 5') von der Außenlage (7) möglich ist.

12. Verfahren nach einem der Ansprüche 6 bis 11, wobei nach einer ersten Ausgestaltung eine Formschulter (16) alle Lagen gemeinsam zum Schlauch formt oder nach einer zweiten Ausgestaltung eine Formschulter (16) ein zusätzliches Umformorgan (26) aufweist, auf dem der Schlauch aus jeder weiteren Lage neben der Innenlage (5, 5') gebildet wird, oder nach einer dritten Ausgestaltung die Schläuche für die Innenlage (5, 5') und die Außenlage (7) jeweils auf einer gesonderte Formschulter (16) gebildet werden, wobei die Formschultern (16) entlang einer Schlauchachse (17) in der Reihenfolge der Lagen (5, 5', 7) angeordnet sind.

13. Verfahren nach einem der Ansprüche 6 bis 12, wobei die Längssiegeleinheit (18) oberhalb eines Vakuumriemenabzugs (22), ausgebildet als von Vakuum beaufschlagte Abzugsbänder, angeordnet ist, sodass zuerst eine Verbindung zwischen den Lagen (5, 5', 7) hergestellt wird und danach der Vakuumriemenabzugs (22) die Außenseite (72) der Außenlage (7) ergreift und durch die stoffschlüssige Verbindung der Lagen (5, 5', 7) der Hauptabzug der Innenlage (5, 5') und der Außenlage (7) gemeinsam erfolgt.

14. Verfahren nach einem der Ansprüche 6 bis 13, wobei der Hauptabzug durch die Verwendung eines Zangenabzuges (21) erfolgt, indem eine Quersiegeleinheit (20) für den Hauptabzug verwendet wird und ein gleichzeitiger Transport von allen durch die Quernaht (82) verbundenen Lagen (5, 5', 7) erfolgt.

15. Verfahren nach einem der Ansprüche 6 bis 14, wobei der Hauptabzug mittels Abzugsrollen (184) gleichzeitig mit der Herstellung der Längsnaht (60) erfolgt, wobei zur Bildung der kontinuierlichen Längsnaht (60) aus den zu verbindenden Lagen (5, 5', 7) eine Flosse gebildet wird, die zwischen den Abzugsrollen (184) durchläuft und dabei durch die Abzugsrollen (184) gesiegelt wird, und an der Flosse erfolgt zugleich der Weitertransport der Lagen (5, 5', 7), indem wenigstens eine angetriebene Abzugsrolle (184) vorgesehen ist, die in die dazwischen geklemmte als Flossennaht ausgebildete Längsnaht (60) eine Zugkraft einträgt.

## Claims

1. A method for producing a multi-layer seam of a packaging material, wherein at least three layers of packaging material, two inner layers (5, 5') and at least one outer layer (7), are joined in such a way that at least one first partial seam is produced between the two inner layers (5, 5'), which has a first seam strength, and at least one second partial seam, which is arranged in substantially the same position as the at least one first partial seam, is produced between at least two layers, one of the inner layers (5, 5') and one of the outer layers (7), which has a second seam strength, **characterised in that** that the first and second seam strengths are realised by the binding properties of at least one of the surfaces or of the material of the inner layers and of the at least one outer layer, at least in the region of the at least one first partial seam and/or of the at least one second partial seam, in such a way that a closure connection (64) for a first utilisation cycle is formed by the first partial seam and a separating connection (66), which is not releasable when the closure connection (64) is released by separating the inner layers from one another in order to open the packaging means, but is releasable during a second utilisation cycle, is formed by the second partial seam.

2. The method according to claim 1, wherein the first utilisation cycle comprises opening the packaging means (2, 210, 220, 230, 240, 250, 260) outside the closure connection or releasing the closure connection (64) by separating the inner layers (5, 5') from one another in order to open the packaging means (2, 210, 220, 230, 240, 250, 260) and the second utilisation cycle comprises a separation of the inner layers (5, 5') from the at least one outer layer (7) at least into different packaging materials by releasing the separating connection (66).

3. The method according to one of the previous claims, wherein the multilayer seam is executed as a sealing seam by a method of heat contact sealing or by cold sealing.

4. The method according to claim 3, wherein, to realise the multilayer seam with the formation of a releasable separating connection (66) between the outer layer (7) and the inner layer (5, 5') during heat contact sealing, a packaging material structure of the layers (5', 7) which has a lower melting point on an inner side (54) of the inner layer (5') than on its outer side (52), so that the inner sides are connected by a sealed and mechanically stable closure connection (64) and the inner sides (74) of the outer layer (7) are connected to the outer sides (52) of the inner layer (5') in a releasable manner by the separating connection (66).

5. The method according to one of the previous claims, wherein at least one of the multilayer seams forming the closure connection (64) and the separation connection (66) is carried out on a multilayer tubular bag (2, 210, 220, 230, 240, 250, 260).

6. The method according to any of the preceding claims, wherein the seams for producing the multilayer tubular bag (2, 210, 220, 230, 240, 250, 260), in which the plurality of layers (5, 5', 7) are supplied separately in a first step to form a multilayer tube, in a second step the tube is shaped, in a third step a longitudinal seam (60, 60') is formed, thereby closing the tube lengthwise, and in a fourth step the transverse seam (82) is formed, which, after filling with a packaged product and together with the transverse seam (82) formed in the previous cycle, forms the tubular bag packaging (2, 210, 220, 230, 240, 250, 260) from the tube, wherein at least two layers, an inner layer (5, 5') and an outer layer (7), wherein, with the formation of the longitudinal seam (60, 60'), the inner layer (5, 5') is provided with a sealed and mechanically stable inner fin (62) and, at the same time, edge strips of the outer layer (7) are joined to the inner fin (62) on both sides in a re-detachable manner, at least on part of the longitudinal seam (60, 60'), so that after use of the tubular bag packaging (2, 210, 220, 230, 240, 250, 260) it is possible to completely separate the inner layer (5, 5') from the outer layer (7).

7. The method according to claim 6, wherein according to a first embodiment the complete longitudinal seam (60, 60') with at least the inner layer (5, 5') and on the outer sides of the longitudinal seam (60, 60') joined inner sides (74) of the outer layer (7) is designed as a folded fin seam (60) or according to a second embodiment the longitudinal seam (60, 60') of at least the inner layer (5, 5') is designed as a folded fin seam (60'), with which the two edge strips of the outer layer (7) are connected, so that a first side of the fin seam (60') is connected to an outer side (72) and a second side of the fin seam (60') is connected to the inner side (74) of the outer layer (7).

8. The method according to claim 6 or 7, wherein according to a first embodiment the inner layer (5, 5') is joined to the outer layer (7) immediately after being unwound from the individual packaging material rolls (4, 6), or according to a second embodiment the inner layer (5, 5') and the outer layer (7) are guided individually and are only joined immediately before the tube is formed and are guided together over a moulding shoulder (16), or according to a third embodiment, the inner layer (5, 5') and the outer layer (7) are each individually guided to a moulding shoulder (16, 16') for each layer (5, 5', 7) and the tubes formed there are then transferred into one another, or according to a fourth embodiment, the inner layer (5, 5') and the outer layer (7) are stored together one above the other on a packaging material roll (4, 6) and are guided together over the moulding shoulder (16).

9. The method according to one of the claims 6 to 8, wherein the outer layer (7) or additionally one of the following layers, except the inner layer (5, 5'), has at least one recess (86) through which the inwardly following layer or the inner layer (5, 5') of the multilayer tubular bag packaging (2, 210, 220, 230, 240, 250, 260) is visible, and wherein the recess (86) is already present in a prefabricated state or is formed internally by the packaging material roll (6) after the de-storing.

10. The method according to one of claims 6 to 9, wherein the outer layer (7) is printed internally and before being brought together with the inner layer (5, 5') or further layers.

11. The method according to any one of claims 6 to 10, wherein the layers (5, 5', 7) are separately supplied to form a multi-layer tube, the tube is formed in at least one forming shoulder (16) and a longitudinal sealing unit (18) forms a longitudinal seam (60, 60'), wherein a transverse sealing unit (20) forms a transverse seam (82) which, after being filled with a packaged product and together with the transverse seam (82) formed in the preceding cycle, forms the tubular bag packaging (2, 210, 220, 230, 240, 250, 260) from the tube, wherein the longitudinal sealing unit (18) is controlled in such a way that a sealed and mechanically stable inner fin (62) is formed with the longitudinal seam (60, 60') on the inner layer (5, 5') and, at the same time, edge strips of the outer layer (7) are joined to the inner fin (62) on both sides in a re-detachable manner at least on part of the longitudinal seam (60, 60'), so that after use of the tubular bag packaging a complete separation of the inner layer (5, 5') from the outer layer (7) is possible.

12. The method according to one of the claims 6 to 11, wherein according to a first embodiment a forming shoulder (16) forms all the layers together into a tube or according to a second embodiment a forming shoulder (16) has an additional forming element (26) on which the tube of each further layer is formed in addition to the inner layer (5, 5'), or according to a third embodiment, the tubes for the inner layer (5, 5') and the outer layer (7) are each formed on a separate mould shoulder (16), wherein the mould shoulders (16) are arranged along a tube axis (17) in the order of the layers (5, 5', 7).

13. The method according to one of claims 6 to 12, wherein the longitudinal sealing unit (18) is arranged above a vacuum belt take-off (22), designed as take-off belts subjected to vacuum, so that first a connection is produced between the layers (5, 5', 7) and then the vacuum belt puller (22) grips the outer side (72) of the outer layer (7) and the main pull of the inner layer (5, 5') and the outer layer (7) is carried out together by the material-locking connection of the layers (5, 5', 7).

14. The method according to one of claims 6 to 13, wherein the main draw-off is effected by using a pincer draw-off (21), wherein a cross-sealing unit (20) is used for the main draw-off and a simultaneous transport of all layers (5, 5', 7) connected by the transverse seam (82) is effected.

15. The method according to any one of claims 6 to 14, wherein the main draw-off by means of draw-off rollers (184) is carried out simultaneously with the production of the longitudinal seam (60), wherein, to form the continuous longitudinal seam (60) from the layers (5, 5', 7) to be joined, is formed which passes between the draw-off rollers (184) and is sealed by the draw-off rollers (184), and at the same time the layers (5, 5', 7) are transported further along the fin, in that at least one driven draw-off roller (184) is provided which exerts a tensile force in the fin seam (60), which is clamped in between and is designed as a fin seam.

## Revendications

1. Procédé de fabrication d'une soudure multicouche d'un emballage, dans lequel au moins trois couches de matériau d'emballage, deux couches intérieures (5, 5') et au moins une couche extérieure (7), sont assemblées de telle sorte qu'au moins une première soudure partielle est réalisée entre les deux couches intérieures (5, 5'), qui présente une première résistance de soudure, et qu'au moins un deuxième joint partiel, disposé sensiblement dans la même position que le premier joint partiel, est réalisé entre au moins deux couches, l'une des couches intérieures (5, 5') et l'une des couches extérieures (7), qui présente une deuxième résistance de joint, **caractérisé en ce que** la première et la deuxième résistance de la couture sont réalisées par les propriétés de liaison d'au moins une des surfaces ou du matériau des couches intérieures et de la au moins une couche extérieure au moins dans la zone de la au moins une première couture partielle et/ou de la au moins une deuxième couture partielle de telle manière de telle sorte que le premier joint partiel forme une liaison de fermeture (64) pour un premier cycle d'utilisation et que le deuxième joint partiel forme une liaison de séparation (66) qui ne peut pas être défaite lors de la séparation des couches intérieures l'une de l'autre pour ouvrir l'emballage, mais qui peut être défaite pendant un deuxième cycle d'utilisation.

2. Procédé selon la revendication 1, dans lequel le premier cycle d'utilisation consiste à ouvrir l'emballage (2, 210, 220, 230, 240, 250, 260) en dehors de la liaison de fermeture ou à détacher la liaison de fermeture (64) en séparant les couches intérieures (5, 5') l'une de l'autre pour ouvrir l'emballage (2, 210, 220, 230, 240, 250, 260) et le deuxième cycle d'utilisation comprend une séparation des couches intérieures (5, 5') de la au moins une couche extérieure (7) au moins en différents matériaux d'emballage par le desserrage de la liaison de séparation (66).

3. Procédé selon l'une des revendications précédentes, dans lequel la soudure multicouche est réalisée sous forme de soudure de scellage par un procédé de scellage par contact thermique ou par scellage à froid.

4. Procédé selon la revendication 3, dans lequel, pour réaliser la soudure multicouche avec formation d'une liaison de séparation amovible (66) entre la couche extérieure (7) et la couche intérieure (5, 5'), lors du scellage par contact thermique, il est prévu une structure de matériau de remplissage des couches (5', 7) qui présente un point de fusion plus bas sur la face intérieure (54) de la couche intérieure (5') que sur sa face extérieure (52), de sorte que les faces intérieures sont reliées par un joint de fermeture (64) étanche et mécaniquement stable et que les faces intérieures (74) de la couche extérieure (7) sont reliées de manière amovible aux faces extérieures (52) de la couche intérieure (5') par le joint de séparation (66).

5. Procédé selon l'une des revendications précédentes, dans lequel au moins l'une des soudures multicouches formant la liaison de fermeture (64) et la liaison de séparation (66) est réalisée sur un emballage tubulaire multicouche (2, 210, 220, 230, 240, 250, 260).

6. Procédé selon l'une des revendications précédentes, dans lequel les soudures pour la fabrication de l'emballage tubulaire multicouche (2, 210, 220, 230, 240, 250, 260), dans lequel les plusieurs couches (5, 5', 7) sont amenées séparément dans une première étape pour former un tube multicouche, dans une deuxième étape le tube est formé, dans une troisième étape une couture longitudinale (60, 60') est formée, ce qui ferme le tube dans le sens de la longueur, et dans une quatrième étape la couture transversale (82) est formée, qui, après avoir été remplie d'un produit et conjointement avec la soudure transversale (82) formée lors de l'étape précédente, forme l'emballage en sachet tubulaire (2, 210, 220, 230, 240, 250, 260) à partir du tube, au moins deux couches, une couche intérieure (5, 5') et une couche extérieure (7), étant prévues, la couche intérieure (5, 5') formant, lors de la formation de la soudure longitudinale (60, 60'), une ailette intérieure (62) étanche et mécaniquement stable, et des bandes de bordure de la couche extérieure (7) étant en même temps assemblées de manière détachable sur l'ailette intérieure (62), au moins sur une partie de la soudure longitudinale (60, 60'), de sorte qu'après utilisation de l'emballage tubulaire (2, 210, 220, 230, 240, 250, 260), une séparation complète de la couche intérieure (5, 5') de la couche extérieure (7) est possible.

7. Procédé selon la revendication 6, dans lequel, selon un premier mode de réalisation, la couture longitudinale complète (60, 60') est réalisée avec au moins la couche intérieure (5, 5') et les côtés intérieurs (74) de la couche extérieure (7) ajoutés sur les côtés extérieurs de la couture longitudinale (60, 60') sous la forme d'une couture à nervures repliée (60), ou selon un deuxième mode de réalisation forme, la couture longitudinale (60, 60') au moins de la couche intérieure (5, 5') est réalisée sous la forme d'une couture à rabattre (60'), avec laquelle les deux bandes de bordure de la couche extérieure (7) sont reliées, de sorte qu'un premier côté de la couture à rabats (60') est relié à une face extérieure (72) et un deuxième côté de la couture à rabats (60') est relié à la face intérieure (74) de la couche extérieure (7).

8. Procédé selon la revendication 6 ou 7, dans lequel, selon un premier mode de réalisation, la couche intérieure (5, 5') est assemblée à la couche extérieure (7) immédiatement après le dépilage des rouleaux de matériau d'emballage individuels (4, 6), ou selon un deuxième mode de réalisation, la couche intérieure (5, 5') et la couche extérieure (7) sont guidées individuellement et assemblées seulement immédiatement avant le formage du tube et guidées ensemble sur un épaulement de formage (16), ou selon une troisième variante, la couche intérieure (5, 5') et la couche extérieure (7) sont guidées individuellement vers un épaulement de formage (16, 16') pour chaque couche (5, 5', 7) et les tuyaux ainsi formés sont ensuite emboîtés les uns dans les autres, ou selon un quatrième mode de réalisation, la couche intérieure (5, 5') et la couche extérieure (7) sont stockées ensemble l'une sur l'autre sur un rouleau de matériau d'emballage (4, 6) et sont guidées ensemble sur l'épaulement de formage (16).

9. Procédé selon l'une des revendications 6 à 8, dans lequel la couche extérieure (7) ou en plus l'une des couches suivantes, à l'exception de la couche intérieure (5, 5'), présente au moins un évidement (86) à travers laquelle la couche suivante vers l'intérieur ou la couche intérieure (5, 5') de l'emballage multicouche en sachet tubulaire (2, 210, 220, 230, 240, 250, 260) est visible, et l'évidement (86) étant déjà préfabriqué ou étant formé en interne après avoir été déstocké du rouleau de matériau d'emballage (6).

10. Procédé selon l'une des revendications 6 à 9, dans lequel la couche extérieure (7) est imprimée en interne et avant d'être assemblée avec la couche intérieure (5, 5') ou d'autres couches.

11. Procédé selon l'une des revendications 6 à 10, dans lequel les couches (5, 5', 7) sont amenées séparément pour former un tuyau multicouche, le tuyau est formé dans au moins un épaulement de formage (16) et une unité de scellage longitudinal (18) forme un joint longitudinal (60, 60'), une unité de scellage transversal (20) formant un joint transversal (82) qui, après avoir été rempli d'un produit emballé et conjointement avec le joint transversal (82) formé lors de la phase précédente, forme l'emballage en sachet tubulaire (2, 210, 220, 230, 240, 250, 260) à partir du tube, l'unité de scellage longitudinal (18) étant commandée de telle manière qu'une ailette intérieure (62) étanche et mécaniquement stable soit formée avec le joint longitudinal (60, 60') sur la couche intérieure (5, 5') et que des bandes de bordure de la couche extérieure (7) soient en même temps fixées de manière détachable des deux côtés de l'ailette intérieure (62) au moins sur une partie de la couture longitudinale (60, 60'), de sorte qu'après utilisation de l'emballage tubulaire, une séparation complète de la couche intérieure (5, 5') de la couche extérieure (7) est possible.

12. Procédé selon l'une des revendications 6 à 11, dans lequel, selon une première réalisation, un épaulement de formage (16) forme toutes les couches ensemble pour former le tube, ou selon une deuxième réalisation, un épaulement de formage (16) comporte un organe de formage supplémentaire (26) sur lequel le tube est formé à partir de chaque couche supplémentaire en plus de la couche intérieure (5, 5'), ou selon une troisième configuration, les tuyaux pour la couche intérieure (5, 5') et la couche extérieure (7) sont formés chacun sur un épaulement de formage (16) séparé, les épaulements de formage (16) étant disposés le long d'un axe de tuyau (17) dans l'ordre des couches (5, 5', 7).

13. Procédé selon l'une des revendications 6 à 12, dans lequel l'unité de scellage longitudinal (18) est disposée au-dessus d'un extracteur à courroie sous vide (22), conçu comme des bandes d'extraction soumises à un vide, de sorte qu'une liaison est d'abord établie entre les couches (5, 5', 7) est établie, puis le dispositif d'extraction à courroie sous vide (22) saisit la face extérieure (72) de la couche extérieure (7) et l'extraction principale de la couche intérieure (5, 5') et de la couche extérieure (7) s'effectue conjointement grâce à la liaison par matière des couches (5, 5', 7).

14. Procédé selon l'une des revendications 6 à 13, dans lequel le retrait principal est effectué en utilisant un dispositif de retrait à pinces (21), en utilisant une unité de scellage transversal (20) pour le retrait principal et en transportant simultanément toutes les couches (5, 5', 7) reliées par la couture transversale (82).

15. Procédé selon l'une des revendications 6 à 14, dans lequel le retrait principal s'effectue au moyen de rouleaux de retrait (184) en même temps que la réalisation de la couture longitudinale (60), dans lequel, pour former la couture longitudinale continue (60) à partir des couches (5, 5', 7) à relier une languette est formée, qui passe entre les rouleaux de traction (184) et est ainsi scellée par les rouleaux de traction (184), et le transport des couches (5, 5', 7) se poursuit en même temps sur la languette, en prévoyant au moins un rouleau de traction (184) entraîné qui exerce une force de traction dans le joint longitudinal (60) formé entre les deux et serré entre les deux.
